# EUROPEAN PATENT SPECIFICATION

(11) **EP 1 181 999 B1**
(45) Date of publication and mention of the grant of the patent: **26.01.2005**
(21) Application number: 01125977.7
(22) Date of filing: 13.10.1997
(51) Int. Cl.: B23C 5/20

(54) **Cutting insert for milling**
Frässchneideinsatz
Plaquette de coupe de fraisage

(30) Priority: 17.10.1996 SE 9603817
(43) Date of publication of application: 27.02.2002
(62) Divisional of application: 97909798.7
(73) Proprietor: SECO TOOLS AB, S-737 82 Fagersta (SE)
(72) Inventor: Andersson, Kjell, 73742 Fagersta (SE)
(74) Representative: Taquist, Lennart

(56) References cited:
- EP-A- 0 315 610
- FR-A- 2 172 542
- GB-A- 951 624
- US-A- 5 074 720

## Description

The present invention relates to a cutting insert for face milling as described in the preamble of claim 1 (see for example GB 951 624).

### Prior art

Through UK 951 624 is previously known a tool and a cutting insert substantially of the above-captioned type, wherein the tool is provided such that all cutting edges in the active corner portion of the cutting insert comes into engagement with the work piece during the machining operation. This means that all cutting edges in the corner portion are worn simultaneously and therefore for example a tetragonal cutting insert at most can be indexed to 8 positions with new cutting edges. US-A-4,616,962 discloses a milling insert with four cutting edges.

### Objects of the invention

One object of the present invention is to provide a cutting insert for face milling, wherein at least 16 new cutting edges can be utilized.

Another object of the present invention is to provide a cutting insert for face milling, with many cutting edges which makes utilization economically advantageous.

Still another object of the present invention is to provide an easy working cutting insert for chip removal.

Still another object of the present invention is to provide a cutting insert according to an alternative embodiment which is developed for bringing the chip to deflect in a direction which entails little contact surface and subsequently a low coefficient of friction between the chip and the cutting insert.

These and other objects have been achieved by a cutting insert for face milling according to the subsequent claims with reference to the enclosed drawings.

### Short description of the drawings

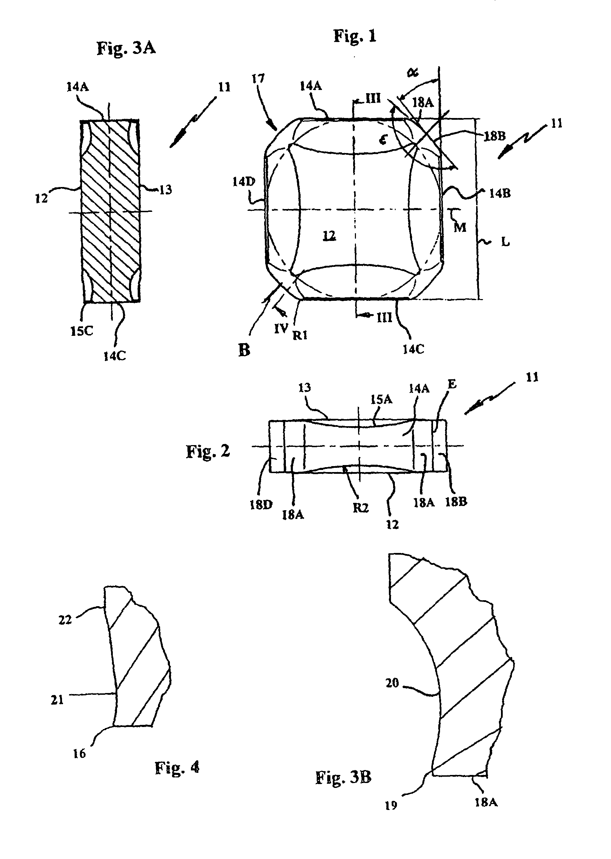

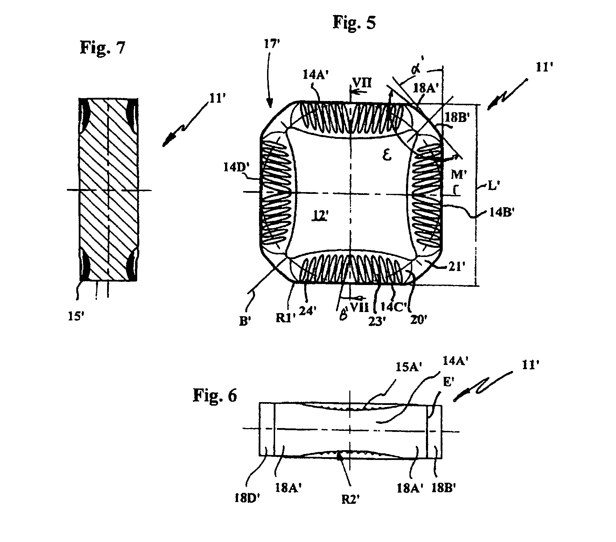

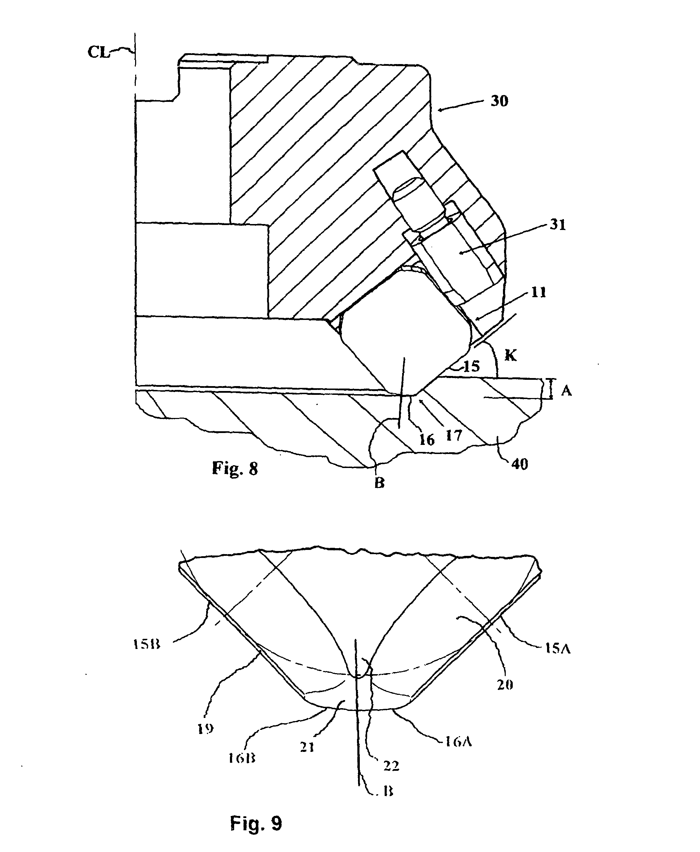

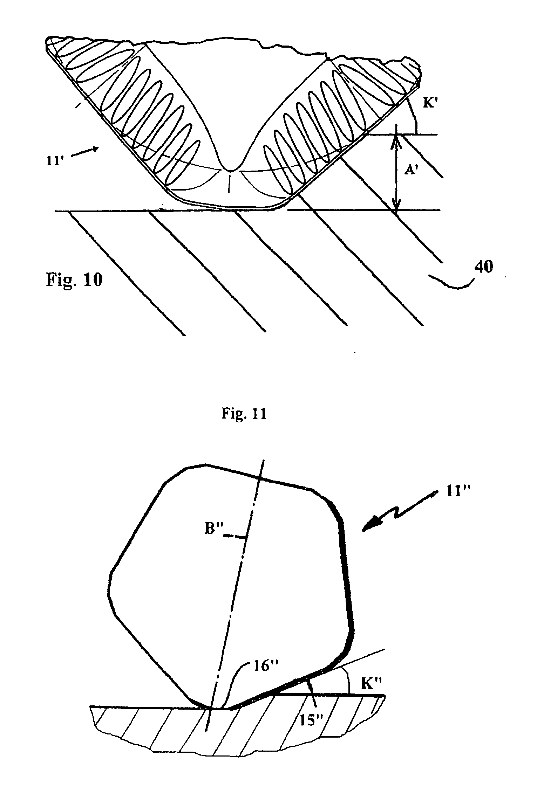

Fig. 1 shows a tetragonal cutting insert according to the present invention in a plane view. Fig. 2 shows the cutting insert in a side view. Fig. 3A shows the cutting insert in a cross-section according to line III-III in Fig. 1 and Fig. 3B shows an enlarged cross-section of a cutting corner in Fig. 3A. Fig. 4 shows the cutting insert in a cross-section according to line IV-IV in Fig. 1. Fig. 5 shows an alternative embodiment of a tetragonal cutting insert according to the present invention in a plane view. Fig. 6 shows the alternative cutting insert in a side view. Fig. 7 shows the alternative cutting insert in a cross-section according to line VII-VII in Fig. 5. Fig. 8 shows a tool in a side view. Figs. 9 and 10 show magnifications of the tool's active corner for the two alternatives, as seen towards the plane of the active side faces of the cutting insert. Fig. 11 shows an additional embodiment of a cutting insert according to the present invention in a plane view.

### Detailed description of the invention

With reference to Figs. 1-4 and 9 is shown a cutting insert 11 for face milling according to the present invention. The cutting insert consists of a matrix of sintered, preferably coated, cemented carbide and has a polygonal basic shape, in this case a tetragonal basic shape. The cutting insert may alternatively be pentagonal or hexagonal. The cutting insert 11 comprises two, essentially parallel, side faces 12, 13 as well as them uniting edge surfaces 14A-14D. The side face 13 is identical to the side face 12, and therefore only one side face is described hereinafter. The cutting insert 11 has a negative geometry, i.e. the edge surfaces perpendicularly connect the side faces. However, it is possible within the scope of the invention that the cutting insert has a double positive geometry, i.e. each edge surface forms an acute angle with the connected side face by providing a central circumferential recess in the edge surfaces 14A -14D. Cutting edges 15, 16 are formed in the area of the side face 12 intersection with the edge surface 14. In the cutting corner 17 between two adjacent edge surfaces, for example 14A and 14B, and 18B. The edges which are arranged in the area of the side face 12 intersection with the respective bevel surface 18 around of the cutting corner 17 bisector B are called minor cutting edges 16. Said edges will generate the surface on the work piece 40 during the face milling operation by being arranged parallel to the surface of the work piece which shall be generated or arranged perpendicular to the axis of rotation of the milling tool. The remaining edges, which are intended to cut the major part of the material in the form of chips, are called major cutting edges 15. Only one major cutting edge and one minor cutting edge must be in engagement simultaneously and thereby these two edges work in pair. The minor cutting edge 16 forms an acute external angle α with the associated major cutting edge 15. The angle α lies in the interval 38° to 42°, preferably around 40°.

The major cutting edge 15 inwardly connects to a chip-upsetting surface or primary bevel 19, Fig. 3B, which constitutes the most peripheral part of the side face 12. The primary bevel is negatively angled and does not extend along the cutting corner 17 since the minor cutting edge 16 must be as sharp and as easy cutting as possible, but instead a suitable edge radius on the cutting edge 16 is chosen. A first chip forming surface 20 is situated inside the chip-upsetting surface 19. A second chip forming surface 21 is situated inside the minor cutting edge in the cutting corner. The second chip forming surface 21, Fig. 4, is shallower than the first chip forming surface 20, for shaping the chips during the face milling operation. An area 22 is provided in the side face 12, symmetrically about the bisector B to further form favorable chips and for best supporting the cutting corner.

In side view is evident that the minor cutting edges 16 are provided in planes parallel with the side faces but somewhat under the associated side face. The minor cutting edge 16 connects to the associated major cutting edge 15 via a radius R1. Alternatively the radius R1 can be replaced by a number of plane facets. By the expression "associated major cutting edge and minor cutting edge" is here meant that only these cutting edges cooperate during milling and that they are physically connected to each other possibly via a radius. Connecting minor cutting edges 16 form an obtuse inner angle ε, which is of the magnitude of 170° and the minor cutting edges are mirror-imaged about the bisector B. Each minor cutting edge connects to a substantially planar bevel surface on the clearance surface.

Adjacent bevel surfaces connect along a line E, which coincides with the plane of the bisector. The major cutting edge 15 is concavely curved with a radius R2 with the intention to form a somewhat positive axial angle although the cutting insert has been mounted negative in the milling body. The radius R2 is bigger than the length of the side L of the cutting insert. The biggest distance between the major cutting edge and the plane of the connected side face is at the mid M of the major cutting edge, said distance being smaller than 1 mm but bigger than 0,4 mm.

To be able to use all 16 cutting edge pairs in the most suitable manner the major cutting edge 15 should be used not more than to the half of its longitudinal extension, i.e. to the middle of the cutting insert. This means that the cutting depth A should not exceed the half of the length of the side L of the cutting insert, i.e. the cutting depth should maximum be A=L/2 * sin K, where K is the setting angle.

With reference now to Figs. 5-7 an alternative embodiment of a cutting insert 11' is shown according to the present invention for face milling. The same details in the alternative embodiment have been given the same reference numerals. The cutting insert 11' is changed from the earlier described cutting insert in that it, except for the corner portions of the cutting insert 11', comprises a number of recesses 23' in the chip forming surface 20', which recesses are separate along the associated major cutting edge 15' and extend essentially laterally relative to the associated major cutting edge 15'. The recesses are provided in groups of seven pieces or the like about the mid line M of the cutting insert. Crests 24' are situated between the recesses 23' in the chip forming surface 20', said crest 24' bridging the recesses 23' in a direction along the associated major cutting edge 15'. The recesses 23' do not extend perpendicularly to the cutting edge 15' but they form an acute angle β with a line perpendicular to the associated cutting edge 15', such as shown in Fig. 5. The angle β is in the interval of 5°-55°, preferably in the interval of 10°-20°. A preferred value for the angle β is in the magnitude of 15°. An advantage with this type of chip former is that a relatively seen little heat is transferred to the cutting insert from the chip and therefore problems which relate to high temperatures in the cutting edge 15', such as plastic deformation and/or diffusional wear, are avoided. This results in limited wear of the cutting edge and subsequently in better tool life also at high temperatures. Such a type of chip forming is more closely described in US-A-5,074,720, which is hereby incorporated in description regarding chip forming.

In Fig. 8 is shown a face milling cutter including a milling body 30 intended to be rotated in a milling machine. The milling body comprises a number of seats for receiving tetragonal, pentagonal or hexagonal cutting inserts. An adjustment device 31 is provided in order to facilitate fine adjustment of the cutting insert in the cutting insert pocket. The cutting insert is provided to be clamped in a known manner with a clamp after fine adjustment. As is apparent from the figure, the associated major cutting edge 15 and minor cutting edge 16 are provided at one and the same side of the bisector B and two minor cutting edges connect to each other in or in close proximity of the bisector B. The active minor cutting edge 16 is arranged substantially perpendicular to the axis of rotation CL of the face milling cutter. One minor cutting edge 16A generates the surface of the workpiece while the other the minor cutting edge 16B is provided at a distance from the workpiece surface by forming a clearance angle with said surface. The tool has a setting angle K, which is maximum 42°. The major cutting edge 15 is provided to cut the major part of the material which shall be machined in the form of chips and should therefore be reinforced by means of the chip-upsetting surface 19 while the minor cutting edge 16A constitutes a finish cutting edge and should therefore be sharper than the major cutting edge 15.

In Figs. 8 and 10 the cutting inserts 11 and 11', respectively, are shown in engagement with the work piece 40. The tool works with a setting angle K, K' of about 40°.

Fig. 11 shows a pentagonal cutting insert 11", wherein the setting angle K" is chosen in the interval of 15° to 30°, preferably between 20° and 25°. The cutting insert 11" has 20 pairs of cutting edges.

Thus the present invention relates to a cutting insert for face milling wherein at least 16 new cutting edges can be utilized. The cutting insert has at least 8 pairs of cutting edges to be used in one rotational direction and at least 8 pairs of cutting edges to be used in a reversed rotational direction, which makes utilization economically advantageous.

The invention is in no way limited to the above described embodiments. For example the basic shape of the cutting insert may be pentagonal or hexagonal. In addition the recesses 23' may be replaced by projections of similar shapes. Also in other respects the invention can be freely varied within the limits of the appended claims.

## Claims

1. Cutting insert for face milling, wherein the cutting insert has a tetragonal, pentagonal or hexagonal basic form, said cutting insert (11;11';11") comprising two, essentially parallel, side faces (12,13;12',13') as well as them uniting edge surfaces (14A-14D;14A'-14D') and comprising a number of cutting edge pairs which are formed at the transition between a side face (12,13;12',13') and an edge surface (14A-14D;14A'-14D') of the cutting insert, said side face constituting a chip surface and said edge surface constituting a clearance surface, each said cutting edge pairs comprising a major cutting edge (15;15') and a minor cutting edge (16;16'), which meet in the area of a cutting corner (17;17'), which corner has a bisector (B;B'), said minor cutting edge being provided to generate a surface on a work piece (40), wherein
the associated major cutting edge (15;15') and minor cutting edge (16;16') are provided at one and the same side of the bisector (B;B') and that two minor cutting edges connect to each other at or in the vicinity of the bisector (B;B') and that to each other connecting minor cutting edges (16;16') form a blunt inner angle (ε;ε') **characterized in that** the minor cutting edge (16;16') is sharper than the major cutting edge (15;15') by connecting the major cutting edge to a first concave chip forming surface (20;20') in the chip surface via a chip-upsetting surface (19;19') while the minor cutting edge directly connects to a second concave chip forming surface (21;21').

2. Cutting insert according to claim 1,
**characterized in that** the cutting insert (11;11') comprises at least 16 cutting edge pairs and **in that** the associated major cutting edge (15;15') and minor cutting edge (16;16') form a first acute external angle (α;α') with each other, said angle lying in the interval of 38° to 42°, preferably about 40°.

3. Cutting insert according to claim 1 or 2,
**characterized in that** the blunt inner angle (ε;ε') is in the magnitude of 170° and **in that** the minor cutting edges (16;16') are mirror imaged about the bisector (B;B') and **in that** each minor cutting edge (16;16') connects to a substantially planar bevel surface (18A-18D;18A'-18D') on the clearance surface, wherein adjacent bevel surfaces connect along a line (E;E') which coincides with the plane for the bisector.

4. Cutting insert according to claim 3,
**characterized in that** a number of mutually separate, along and inside the cutting edge situated recesses (23') or projections are provided in or on the first concave chip forming surface (20') and that the recesses (23') or the projections have a longitudinal extension in one direction which forms a certain angle (β) with a line which is perpendicular to the associated cutting edge (15'), said angle (β) lying in the interval 5°-55°, preferably in the interval 10°-20° and most preferably around 15°.

## Patentansprüche

1. Schneideinsatz für das Flächenfräsen, wobei der Schneideinsatz (11; 11', 11 ") eine tetragonale, pentagonale oder hexagonale Grundform hat und zwei im wesentlichen parallele Seitenflächen (12, 13; 12', 13') sowie diese vereinigende Kantenflächen (14A - 14D; 14A'-14D') und eine Anzahl von Schneidkantenpaaren aufweist, die am Übergang zwischen einer Seitenfläche (12, 13; 12', 13') und einer Kantenfläche (14A - 14D; 14A' - 14D') des Schneideinsatzes gebildet sind, wobei die Seitenfläche eine Spanfläche bildet und die Kantenfläche eine Freifläche bildet, jeweils die Schneidkantenpaare eine Hauptschneidkante (15; 15') und eine Nebenschneidkante (16; 16') aufweisen, die sich im Bereich einer Schneidecke (17; 17') treffen, welche eine Winkelhalbierende (B; B') hat, die Nebenschneidkante vorgesehen ist, um eine Oberfläche auf einem Werkstück (40) zu erzeugen, wobei die zugeordnete Hauptschneidkante (15; 15') und die Nebenschneidkante (16; 16') auf ein und derselben Seite der Winkelhalbierenden (B; B') vorgesehen sind und sich die zwei Nebenschneidkanten an der Winkelhalbierenden (B; B') oder in der Nachbarschaft derselben aneinander anschließen und einander verbindende Nebenschneidkanten (16; 16') einen stumpfen Innenwinkel (ε; ε') bilden, **dadurch gekennzeichnet, daß** die Nebenschneidkante (16; 16') dadurch schärfer ist als die Hauptschneidkante (15; 15'), daß die Hauptschneidkante mit einer ersten konkaven spanbildenden Fläche (20; 20') in der Spanfläche über eine Spanstauchfläche (19; 19') verbunden ist, während die Nebenschneidkante sich direkt an eine zweite konkave spanbildende Fläche (21; 21') anschließt.

2. Schneideinsatz nach Anspruch 1, **dadurch gekennzeichnet, daß** der Schneideinsatz (11; 11') mindestens 16 Schneidkantenpaare aufweist und daß die zugeordnete Hauptschneidkante (15; 15') und Nebenschneidkante (16; 16') einen ersten spitzen Außenwinkel (α; α') miteinander bilden, wobei der Winkel im Intervall von 38° bis 42° liegt, vorzugsweise etwa bei 40° liegt.

3. Schneideinsatz nach Anspruch 1 oder 2, **dadurch gekennzeichnet, daß** der stumpfe innenwinkel (ε; ε') sich in der Größenordnung von 170° befindet und daß die Nebenschneidkanten (16; 16') Spiegelbilder um die Winkelhalbierende (B; B') herum sind und daß jede Nebenschneidkante (16; 16') sich an eine im wesentlichen ebene Abfasungsfläche (18A - 18D; 18A' - 18D') auf der Freifläche anschließt, wobei sich benachbarte Abfasungsflächen längs einer Linie (E; E') anschließen, die mit der Ebene für die Winkelhalbierenden zusammenfällt.

4. Schneideinsatz nach Anspruch 3, **dadurch gekennzeichnet, daß** eine Anzahl von gegenseitig separaten, längs und innerhalb der Schneidkante angeordneten Ausnehmungen (13') oder Vorsprünge in oder auf der ersten konkaven spanbildenden Fläche (20') vorgesehen ist und daß die Ausnehmungen (23') oder die Vorsprünge eine Längserstreckung in einer Richtung haben, welche einen gewissen Winkel (β) mit einer Linie bildet, die senkrecht zu der zugehörigen Schneidkante (15') liegt, wobei der Winkel (β) in dem Intervall 5° - 55°, vorzugsweise in dem Intervall 10° - 20° und ganz besonders bevorzugt um 15° herum liegt.

## Revendications

1. Plaquette de coupe destinée à un fraisage de surfaçage, dans lequel la plaquette de coupe présente une forme de base quadrilatère, pentagonale ou hexagonale, ladite plaquette de coupe (11 ; 11' ; 11'') comprenant deux faces latérales sensiblement parallèles (12, 13 ; 12', 13') de même que des surfaces d'arêtes qui les réunissent (14A à 14D ; 14A' à 14D') et comprenant un certain nombre de paires d'arêtes de coupe qui sont formées au niveau de la transition entre une face latérale (12, 13 ; 12', 13') et une surface d'arête (14A à 14D ; 14A' à 14D') de la plaquette de coupe, ladite face latérale constituant une surface pour copeaux et ladite surface d'arête constituant une surface de dégagement, chaque dite paire d'arêtes de coupe comprenant une arête de coupe principale (15 ; 15') et une arête de coupe secondaire (16 ; 16'), qui se rencontrent dans la zone d'un point d'attaque de coupe (17 ; 17'), lequel point d'attaque présente une bissectrice (B ; B'), ladite arête de coupe secondaire étant prévue pour générer une surface sur une pièce d'ouvrage (40), dans laquelle l'arête de coupe principale (15 ; 15') et l'arête de coupe secondaire (16 ; 16') associées sont prévues au niveau d'un seul et même côté de la bissectrice (B ; B') et les deux arêtes de coupe secondaires sont reliées l'une à l'autre au niveau ou au voisinage de la bissectrice (B ; B') et chacune des autres arêtes de coupe secondaires de liaison (16 ; 16') forme un angle intérieur chanfreiné (ε ; ε'), **caractérisée en ce que** l'arête de coupe secondaire (16 ; 16') est plus tranchante que l'arête de coupe principale (15 ; 15') en reliant l'arête de coupe principale à une première surface de formation de copeaux concave (20 ; 20') dans la surface pour copeaux par l'intermédiaire d'une surface de refoulement de copeaux (19 ; 19') alors que l'arête de coupe secondaire est reliée directement à une seconde surface de formation de copeaux concave (21 ; 21').

2. Plaquette de coupe selon la revendication 1,
**caractérisée en ce que** la plaquette de coupe (11 ; 11') comprend au moins 16 paires d'arêtes de coupe et **en ce que** l'arête de coupe principale (15 ; 15') et l'arête de coupe secondaire (16 ; 16') associées forment un premier angle externe aigu (α ; α') l'une avec l'autre, ledit angle étant situé dans l'intervalle de 38° à 42°, de préférence étant d'environ 40°.

3. Plaquette de coupe selon la revendication 1 ou 2,
**caractérisée en ce que** l'angle intérieur chanfreiné (ε ; ε') est d'une amplitude de 170° et **en ce que** les arêtes de coupe secondaire (16 ; 16') présentent une symétrie spéculaire autour de la bissectrice (B ; B') et **en ce que** chaque arête de coupe secondaire (16 ; 16') est reliée à une surface de biseau sensiblement plane (18A à 18D ; 18A' à 18D') sur la surface de dégagement, où des surfaces de biseau adjacentes se relient le long d'une ligne (E ; E') qui coïncide avec le plan pour la bissectrice.

4. Plaquette de coupe selon la revendication 3,
**caractérisée en ce qu'**un certain nombre d'évidements (23') ou protubérances mutuellement séparés, situés le long et à l'intérieur de l'arête de coupe sont prévus dans ou sur la première surface de formation de copeaux concave (20') et **en ce que** les évidements (23') ou les protubérances présentent un prolongement longitudinal dans une direction qui forme un certain angle (β) avec une ligne qui est perpendiculaire à l'arête de coupe associée (15'), ledit angle (β) étant situé dans l'intervalle de 5° à 55°, de préférence dans l'intervalle de 10° à 20° et est de la façon la plus préférable d'environ 15°.
